# EUROPEAN PATENT SPECIFICATION

(11) **EP 3 304 684 B1**
(45) Date of publication and mention of the grant of the patent: **14.04.2021**
(21) Application number: 16734492.8
(22) Date of filing: 01.06.2016
(51) Int. Cl.: H02J 7/35

(54) **ADAPTIVE POWER MANAGEMENT FOR SELF-SUSTAINING ENERGY HARVESTING SYSTEM**
ADAPTIVE LEISTUNGSVERWALTUNG FÜR SELBSTERHALTENDES ENERGIEGEWINNUNGSSYSTEM
GESTION D'ÉNERGIE ADAPTATIVE POUR SYSTÈME DE RÉCUPÉRATION D'ÉNERGIE AUTO-ENTRETENU

(30) Priority: 01.06.2015 US 201514726739
(43) Date of publication of application: 11.04.2018
(73) Proprietor: Sensormatic Electronics, LLC, Boca Raton, FL 33487 (US); Sequeira, Melwyn, Fort Lauderdale, FL 33322 (US)
(72) Inventor: SEQUEIRA, Melwyn, Fort Lauderdale, FL 33322 (US); HALL, Stewart, E., Boca Raton, Florida 33487 (US)
(74) Representative: Hafner & Kohl PartmbB
(86) International application number: PCT/US2016/035279
(87) International publication number: WO 2016/196640

(56) References cited:
- JP-A- H0 410 194
- US-A- 5 019 803
- US-A1- 2006 172 782
- US-A1- 2012 068 669

## Description

### FIELD OF THE INVENTION

This document relates generally to power management systems. More particularly, this disclosure relates to systems and methods for adaptive power management for self-sustaining energy harvesting systems.

### BACKGROUND OF THE INVENTION

Wireless sensorization is replacing hard-wired fire protection sensing systems. Typically, protection sensing systems (e.g., smoke detectors) are hard-wired to the fire protection system's main fire panel. The main fire panel often resides at the front or in the basement of a building. The hard-wired fire protection sensing systems are deployed across the building's infrastructure and draw their power from the centralized power source (namely, the main fire panel). Relatively long wires are required to run throughout the building to facilitate the supply of power from the main fire panel to each of the hard-wired fire protection sensing systems. In effect, the systems have large installation costs resulting from the amount of labor and time required to install the same within the building.

Wireless sensorization is also being deployed using batteries to provide sensor and transceiver power. However, these batteries typically have to be replaced within one to two years. In some scenarios, thousands of sensors may be deployed within a single building. One can appreciate that it is quite expensive (in terms of labor, time and part costs) to replace the batteries every few years for each of these sensors.

These wireless sensing systems (e.g., fire systems and gas sensing systems) may be deployed in areas (e.g., vacation home and stairwells) where a primary energy harvesting source (e.g.. lighting) may be turned off for relatively long periods of time (e.g., such as overnight, through a weekend, over holidays, or blocked by shades/blinds/clouds). Even in such environments where the energy harvesting source may be intermittent or turned off for extended periods of time, these wireless sensing systems must continue to operate and provide the safety and security to its environment.

US 2006/0172782 A1 discloses an ambient light control in a building using a sensor which is powered by a supercapacitor. The supercapacitor is charged by harvesting the ambient light via a photocell. In one embodiment, if it is determined that there is too little energy in the supercapacitor, the lights are turned on to recharge it.

### SUMMARY OF THE INVENTION

The disclosure concerns implementing systems and methods for adaptively managing power for an Energy Harvesting System ("EHS") in accordance with the appended Claims. The methods involve: measuring a light intensity level available in a surrounding environment of the EHS; wirelessly communicating a first wireless signal from the EHS to a remote device for causing the light intensity level to be increased by remotely turning on a light source or opening a cover (e.g., a window shade) preventing light emitted from the light source from reaching the EHC, when the light intensity level is below a pre-specified level; using an Energy Harvesting Circuit ("EHC") to recharge a rechargeable battery of the EHS when the light intensity level rises to a level above the pre-specified level; and wirelessly communicating a second wireless signal from the EHS to the remote device for causing the light source be turned off or the cover to be closed, when the capacity or State-Of-Charge ("SOC") of the rechargeable battery reaches a pre-specified value.

The light intensity level is measured when: an available energy in the rechargeable battery is not sufficient to meet an electrical load's energy requirements; a current date matches a pre-stored date or a current time matches a pre-stored time; and/or there is a possibility of a storm or energy deficit in a next N hours, days, weeks or months. The pre-stored date and/or pre-stored time is(are) selected based on at least one of (a) power consumption patterns of the EHS, (b) power profiles of light sources; (c) estimated future energy deficits of the EHS system and/or the light sources, (d) a business entity's hours of operation, (e) current and future weather of the surrounding environment, and (f) times of low power demands on an AC power grid.

### DESCRIPTION OF THE DRAWINGS

Embodiments will be described with reference to the following drawing figures, in which like numerals represent like items throughout the figures, and in which:
FIG. 1 is a schematic illustration showing an exemplary EHS system coupled to a ceiling of a building.
FIG. 2 is a schematic illustration of the EHS system of FIG. 1.
FIG. 3 is a block diagram of power management circuitry of the EHS system shown in FIGS. 1-2.
FIG. 4 is flow diagram of an exemplary method for powering an electrical load in an environment.
FIGS. 5A-5B (collectively referred to herein as "FIG. 5") provide a flow diagram of an exemplary method for adaptively managing power for a self-sustaining energy harvesting system.
FIGS. 6A-6B (collectively referred to herein as "FIG. 6") provide a flow diagram of an exemplary method for adaptively managing power for a self-sustaining energy harvesting system.
FIG. 7 is a schematic illustration of an exemplary system comprising a plurality of EHS systems wirelessly communicatively coupled to a remote computing device.

### DETAILED DESCRIPTION OF THE INVENTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from or essential characteristics. The described embodiments are to be considered in all respects only as illustrative and not restrictive. The scope of the invention is, therefore, indicated by the appended claims rather than by this detailed description.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

Furthermore, the described features, advantages and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

The present disclosure contemplates the use of a self-sustaining EHS system. The EHS system effectively delivers power to and operates one or more loads thereof (e.g., smoke detectors), without having a requirement for the frequent replacement of the power source(s) thereof (as is the case in conventional sensing systems such as that discussed above in the Background Section of this document). In this regard, the EHS system generally collects and converts energy from a light source located within the surrounding environment (e.g., within a building). The converted energy is stored on a first storage element of the EHS system (e.g., a rechargeable battery). Thereafter, the first storage element supplies power to a second storage element (e.g., a super capacitor), which subsequently supplies power to a load (e.g., a sensor).

Notably, the EHS system of the present disclosure operates efficiently in indoor environments where the relatively small amount of available energy from light sources thereof is sufficient to charge the first storage element (e.g., as little as 100mV at 10's of µAmps). In contrast, such available energy is not sufficient to operate conventional boost converter circuits of conventional sensor systems with satisfactory efficiency. As a result, the amount of time needed to initiate operations of these conventional sensor systems (e.g., 10's to 100's of hours) is significantly longer as compared to that of the present EHS system (e.g., near instantaneous).

Additionally, in some conventional EHS systems, the first storage element comprises a super capacitor. Such conventional EHS systems are inoperable in indoor environments since the relatively small amount of available energy from sources of the indoor environment is not sufficient to charge the super capacitor to a level needed for the EHS systems to operate. In contrast, the first storage element of the present EHS system comprises a rechargeable battery. Consequently, the present EHS system is operable in indoor environments since the rechargeable battery has an initial amount of charge (e.g., 3.3 V) sufficient to cause the EHS system to perform its intended functions nearly instantaneously after being powered on, as well as to quickly charge a super capacitor. The battery is recharged by the indoor sources while the load(s) (e.g., a smoke sensor) is(are) being supplied power from the second storage element (e.g., a super capacitor).

The present disclosure also concerns systems and methods for autonomously managing power to an EHS system. The autonomous management is achieved by on-demand commanding and activating energy harvesting sources available with the EHS system's environment. The methods generally involve: sensing harvestable energy present within an EHS system's environment; assessing the sensed harvestable energy; automatically enabling an energy harvesting source based upon results of the assessment so that the energy harvesting source may be utilized by the EHS system to dynamically charge its storage elements and power its sensing system; and automatically disabling the energy harvesting source after the charging is complete to either conserve power and/or extend the operating life of the energy harvesting source. The energy harvesting source includes, but not limited to, an indoor light or an outdoor light. In the outdoor light scenarios, the outdoor light is enabled by opening window shades and disabled by closing window shades.

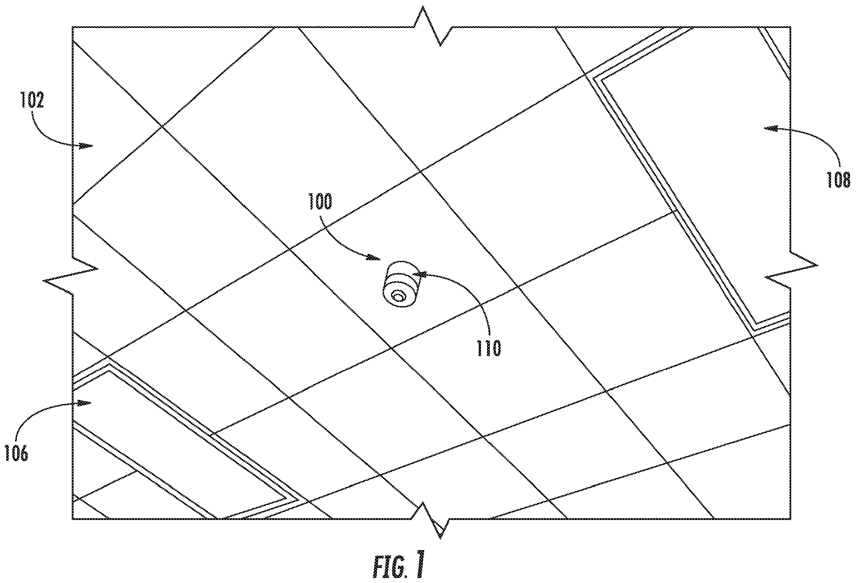

Referring now to FIG. 1, there is provided a schematic illustration of an exemplary EHS system **100** coupled to a ceiling **102** of a building's indoor room. The only source of energy in this indoor room is produced by the lateral dispersion of light from florescent lights **106, 108.** As a result, a luminance of approximately fifty to one hundred lux is provided at the EHS system **100.** Such a luminance is insufficient to power the load(s) of the EHS system **100.** As such, the EHS system **100** comprises a Power Management Circuit ("PMC") (not shown in FIG. 1) for ensuring that power is made available to the load(s) nearly instantaneously after the system has been deployed in the indoor environment.

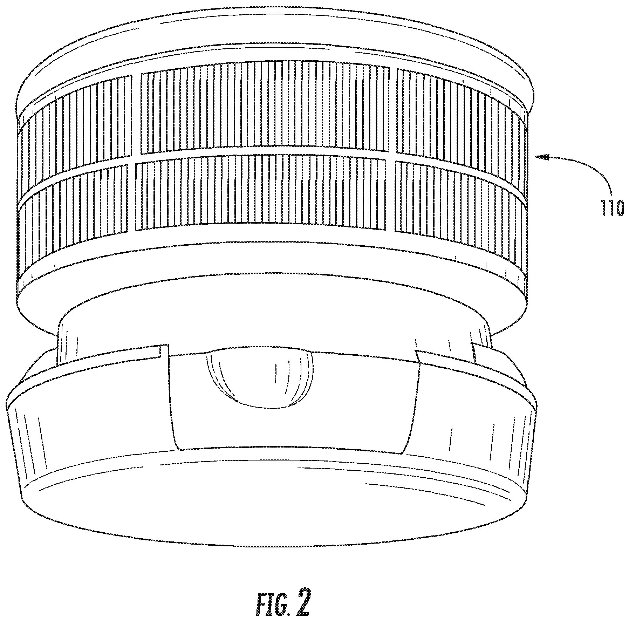

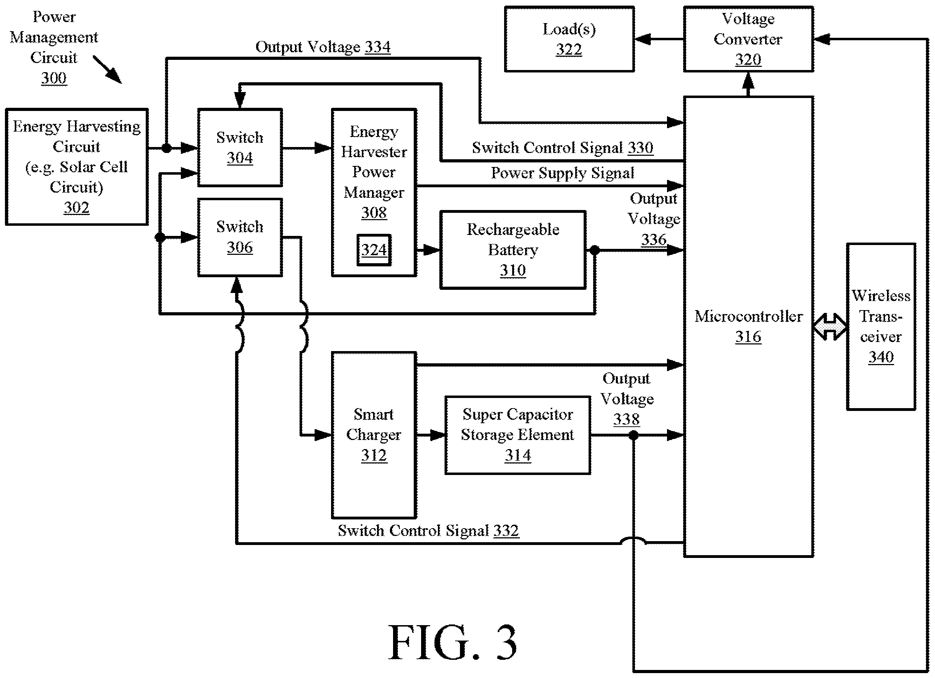

The PMC will be described in detail below in relation to FIG. 3. Still, it should be understood at this time that the PMC comprises photovoltaic cells **110** for converting florescent light energy into direct current electricity using semiconducting materials that exhibit the photovoltaic effect, as shown in FIGS. 1-2. When the photovoltaic cells **110** are exposed to the luminance of approximately fifty to one hundred lux, an extremely low energy power output is generated thereby. For example, in some scenarios, the direct current electrical output generated by the photovoltaic cells is five hundred milli-Volts at approximately three hundred micro-Amps, which results in a power output of one hundred fifty micro-Watts. Such a power level is not sufficient for charging a super capacitor based storage element in a satisfactory amount of time. As such, the present PMC employs a rechargeable battery (not shown in FIGS. 1-2) for storing a power output of the photovoltaic cells **110,** instead of a super capacitor based storage element (as is done in some conventional sensor systems). A super capacitor based storage element (not shown in FIGS. 1-2) of the PMC is then charged by the output power of the rechargeable battery. In effect, the load(s) (not shown in FIGS. 1-2) of the present EHS system **100** is(are) supplied power nearly instantaneously after deployment of the system in the indoor environment. Additionally, the present EHS system **100** can operate fully autonomously and continuously available to perform its intended functions.

Referring now to FIG. 3, there is provided a block diagram of an exemplary architecture **300** for the PMC of the EHS system **100.** The PMC is configured to provide a way in which the EHS system **100** is: deployable as a plug-n-play energy harvested wireless sensor that is ready to function as soon as it is turned on; and a self-sustaining sensor system wherein its power source would virtually never need to be replaced. In this regard, the PMC **300** comprises an energy harvesting circuit **302,** switches **304, 306,** an Energy Harvester Power Manager ("EHPM") **308,** a rechargeable battery **310,** a Super Capacitor ("SC") storage element **314,** a smart charger **312** for the SC storage element, a microcontroller **316,** a DC-DC voltage converter **320,** load(s) **322** and a wireless transceiver **340.** In some scenarios, the energy harvesting circuit **302** comprises a solar cell circuit. The present invention is not limited in this regard. Other types of energy harvesting circuits can be used herein that generate a relatively low amount of output power.

At initial power up of the EHS system **100,** the SC storage element **314** is assumed to be in a completely discharged state. Thus, the initial charge of the SC storage element **314** is at a level of approximately or substantially equal to zero volts. However, the rechargeable battery **310** is in a quasi-discharged state in which its initial charge is at a level greater than zero volts (e.g., 3 volts). As such, the rechargeable battery **310** has a sufficient amount of initial stored energy to nearly instantaneously enable operations of the control electronics of the EHS system **100** (i.e., the EHPM **308** and the microcontroller **316**). In this regard, an output voltage **336** is supplied from the rechargeable battery **310** to the EHPM **308** via switch **304,** whereby operations of boost converters **324** contained in the EHPM **308** are started immediately after turning on the EHS system **100.** The output voltage **336** is also supplied from the rechargeable battery **310** to the microcontroller **316** via the EHPM **308.**

The available power from rechargeable battery is also used at this time to charge the SC storage element **314.** In this regard, the output voltage **336** of the rechargeable battery **310** is supplied to the SC storage element **314** via switch **306** and smart charger **312,** whereby charging of the SC storage element is expedited. An output voltage **338** of the SC storage element is supplied to the load(s) **322** via the voltage converter **320.** The load(s) can include, but is(are) not limited to, smoke detectors, gas detectors and/or the like. The EHS system **100** is considered fully operational when the output voltage **338** reaches a level (e.g., 3.8 V) that is sufficient to cause the load(s) to perform the intended operations thereof.

Throughout operation of the EHS system **100,** the microcontroller **316** monitors the output voltage **334** of the solar cell circuit **302,** as well as the output voltage **336** of the rechargeable battery **310** and the output voltage **338** of the SC storage element **314.** Once the output voltage **338** of the SC storage element **314** reaches a desired voltage (e.g., 3.8 V) after system activation (or powering on), the microcontroller **316** enables a timer to time the charging of the SC storage element **314.** After a pre-determined time period (e.g., 6 hours), an assumption is made that the SC storage element **314** has reached its leakage current equilibrium, and therefore no longer needs to be charged. In effect, the microcontroller **316** may optionally perform operations at this time to terminate the supply of output voltage **336** to the SC storage element **314** via switch **306** and smart charger **312.**

When the output voltage **338** of the SC storage element **314** falls below a threshold value (e.g., 3.3 V), the microcontroller **316** communicates a switch control signal **332** to switch **306** so as cause the output voltage **336** of the rechargeable battery **310** to once again be supplied to the SC storage element **314** via the smart charger **312.** Output voltage **336** is supplied to the SC storage element **314** until the output voltage **338** thereof exceeds an upper threshold value. In effect, the SC storage element **314** is recharged whereby the energy expended while driving load(s) **322** is(are) restored.

When the solar cell circuit **302** is active, the output voltage **334** of the solar cell circuit **302** is supplied to the rechargeable battery **310** via EHPM **308.** In effect, the rechargeable battery **310** is recharged by the solar cell circuit **302,** whereby the energy expended in charging and re-charging the SC storage element **314** is restored while the EHS system **100** is maintained in its fully operational state.

The above described process of using the rechargeable battery **310** to charge the SC storage element **314** is repeated as needed. Thus, the above described EHS system **100** performs self-monitoring and charges its respective re-chargeable elements throughout its entire operation.

In addition to the above process, the PMC **300** performs operations to autonomously managing power to the EHS system **100.** The autonomous management is achieved by on-demand commanding and activating energy harvesting sources (e.g., florescent lights **106, 108** of FIG. 1) available with the EHS system's environment. The methods generally involve: sensing harvestable energy present within an EHS system's environment; assessing the sensed harvestable energy; automatically enabling an energy harvesting source based upon results of the assessment so that the energy harvesting source may be utilized by the EHS system to dynamically charge its rechargeable battery **310** and power its sensing system **322;** and automatically disabling the energy harvesting source after the charging is complete to either conserve power and/or extend the operating life of the energy harvesting source. The energy harvesting source includes, but not limited to, an indoor light or an outdoor light. In the outdoor light scenarios, the outdoor light is enabled by opening window shades and disabled by closing window shades.

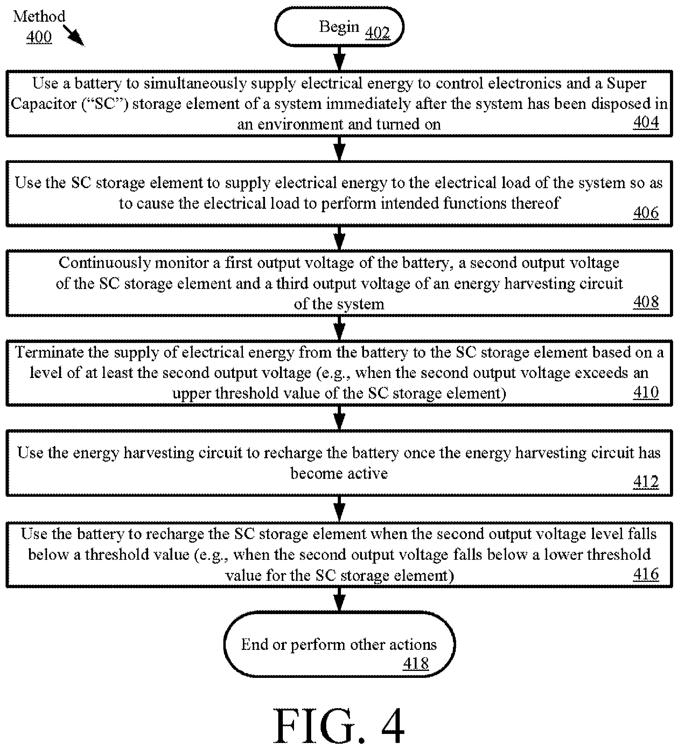

Referring now to FIG. 4, there is provided a flow diagram of an exemplary method **400** for powering an electrical load in an environment. The method **400** begins with step **402** and continues with step **404.** In step **404,** a battery (e.g., rechargeable battery **310)** is used to simultaneously supply electrical energy to control electronics (e.g., control electronics **308, 316** of FIG. 3) and an SC storage element (e.g., SC storage element **314** of FIG. 3) of a system (e.g., system **100** of FIG. 1) immediately after the system has been disposed in the environment and activated (or turned on). In effect, the control electronics are caused to perform intended functions thereof nearly instantaneously after activating (or turning on) the system. The SC storage element is charged from a first charge state in which approximately zero volts exist across terminals thereof to a second charge state in which greater than zero volts exists across the terminals. The SC storage element is then used in step **406** to supply electrical energy to the electrical load (e.g., load **322** of FIG. 3) of the system so as to cause the electrical load to perform intended functions thereof.

Notably, the system continuously monitors a first output voltage of the battery, a second output voltage of the SC storage element and a third output voltage of an energy harvesting circuit of the system (e.g., energy harvesting circuit **302** of FIG. 3). The supply of electrical energy from the battery to the SC storage element is terminated in step **410** based on a level of at least the second output voltage. For example, in some scenarios, the battery's supply of electrical energy to the SC storage element is terminated when a determination is made that the SC storage element has reached a leakage current equilibrium or a determination that the output voltage of the SC storage element exceeds an upper threshold value thereof. The leakage current equilibrium is determined to be reached upon an expiration of a pre-defined time period (e.g., 6 hours) which was detected based on an output of a previously enabled timer.

The energy harvesting circuit is used in step **412** to recharge the battery once it becomes active. In a next step **416,** the battery is used to recharge to SC storage element when the second output voltage falls below a first threshold value (e.g., when the output voltage of the SC storage element falls below a lower threshold value). Subsequent to completing step **416,** step **418** is performed where method **400** ends or other actions are performed.

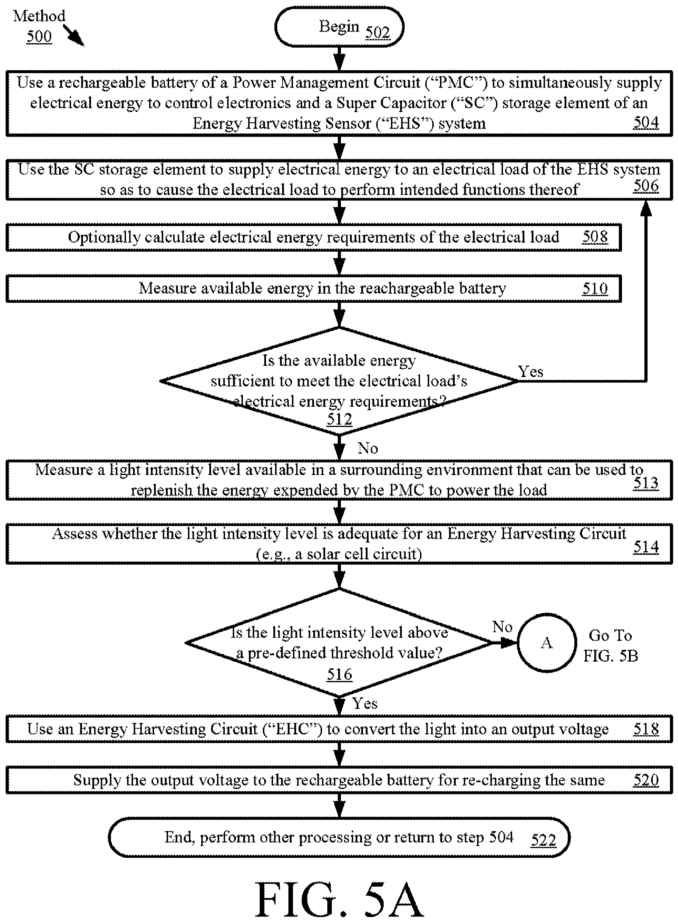

Referring now to FIGS. 5A-5B, there is provided a flow diagram of an exemplary method **500** for adaptively managing power for a self-sustaining EHS. The method **500** begins with step **502** and continues with step **504** where a rechargeable battery (e.g., rechargeable battery **310** of FIG. 3) of a PMC (e.g., PMC **300** of FIG. 3) is used to supply electrical energy to control electronics and an SC storage element (e.g., SC storage element **314** of FIG. 3) of an EHS system (e.g., EHS system **100** of FIG. 1). In a next step **506,** the SC storage element is used to supply electrical energy to an electrical load (e.g.., load **322** of FIG. 3) of the EHS system so as to cause the electrical load to perform unintended functions thereof.

Upon completing step **506,** an optional step **508** may be performed. Optional step **508** involves calculating electrical energy requirements of the electrical load. In some scenarios, the electrical energy requirements are pre-calculated prior to deployment of the EHS system. In both cases, step **510** is performed where a measurement is made with regard to the available energy in the rechargeable battery. This measurement can involve measuring the capacity and/or SOC of the rechargeable battery. The term "State-Of-Charge" or "SOC", as used herein, refers to a percentage of charge (e.g., 0%-100%). The term "capacity", as used herein, refers to a measure (e.g., Amp-hr) of the charge stored by a power source (e.g., a battery), and is determined by the mass of the active material contained in the power source. The measured capacity and/or SOC may then be used to determine the duration of operation that can be afforded by the stored power.

Next, a determination is made as to whether the available energy is sufficient to meet the electrical load's electrical energy requirements. This determination can be made by comparing the capacity and/or SOC to a pre-defined threshold value. The pre-defined threshold value may be selected based on the measured electrical energy requirements of the electrical load. If the available energy is sufficient to meet the electrical load's electrical energy requirements **[512:YES],** then method **500** returns to step **506** so that the electrical load continues to be supplied power. In contrast, if the available energy is not sufficient to meet the electrical load's electrical energy requirements **[512:NO],** then method **500** continues with step **513.**

Step **513** involves measuring a light intensity level available in a surrounding environment that can be used to replenish the energy expended by the PMC to power the load. Next, an assessment is made as to whether the light intensity level available is adequate for an EHC (e.g., EHC **302** of FIG. 3). If the light intensity level is above a pre-defined threshold value **[516:YES],** then steps **518-520** are performed. These steps involve: using the EHC to convert light into an output voltage; and supplying the output voltage to the rechargeable battery for re-charging the same. Next, step **522** is performed where method **500** ends, other processing is performed or method **500** returns to step **504.**

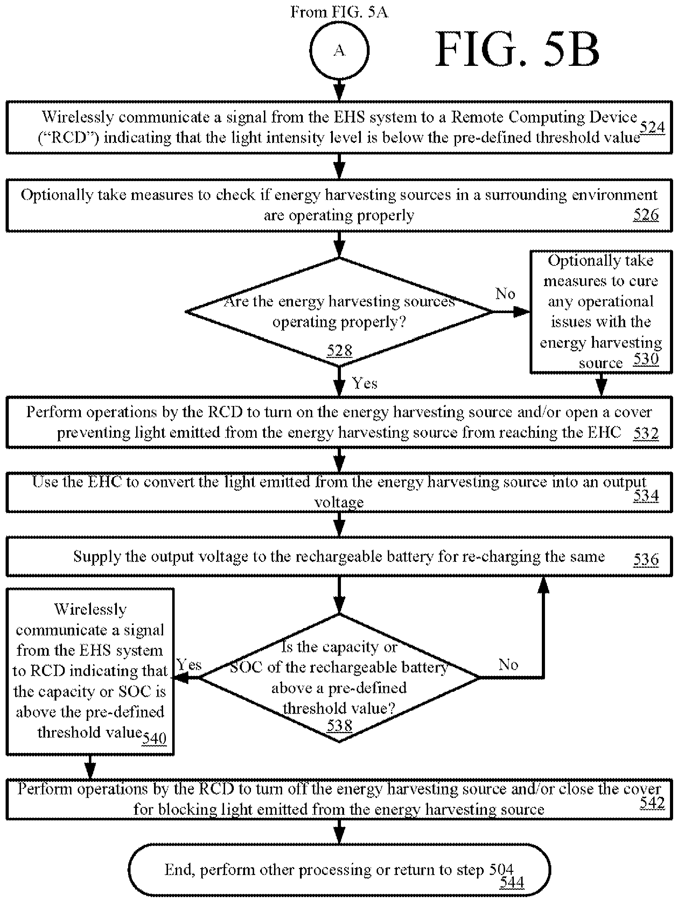

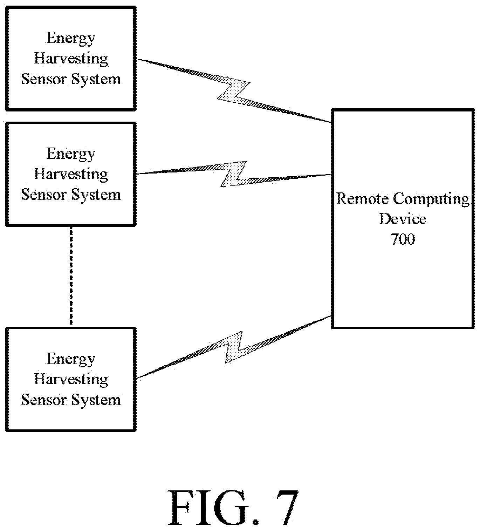

In contrast, if the light intensity level is below the pre-defined threshold value **[516:NO],** then method **500** continues with step **524** of FIG. 5B. Step **524** involves wirelessly communicating a signal from the EHS to a Remote Computing Device ("RCD") indicating that the light intensity level is inadequate for the EHC. The RCD (e.g., RCD **700** of FIG. 7) can include, but is not limited to, a server or other computing processing device. All of a portion of the RCD may be located in the same or different facility that the EHS system is disposed. The wireless communication can be achieved using any known or to be known wireless protocol. For example, the wireless communication is achieved using WiFi technology, Bluetooth technology, Zigbee technology, Z-Wave technology, cellular technology, custom sub-gig technology, and/or Ethernet technology.

In response to the wireless signal, measures can be optionally taken to check if energy harvesting sources in the surrounding environment are operating properly, as shown by step **526.** For example, a determination can be made as to whether indoor lights are working properly, whether mechanical/electrical window shades are working properly, and/or whether power is being supplied to the lights and/or window shades. If the energy harvesting source(s) is(are) not operating properly **[528:NO],** then optional step **530** is performed where measures are taken to cure any operational issues with the energy harvesting source(s). For example, a person can be deployed to change a light bulb, fix a mechanical component of the mechanical/electrical window shades, turn on a generator so that power is supplied to the lights and/or window shades, and/or contact an electric company to inform them of a loss of power. Next, step **532** is performed which will be described below.

If the energy harvesting source(s) is(are) operating properly **[528:YES],** then step **532** is performed where the RCD performs operations to turn on the energy harvesting source(s) and/or open a cover (e.g., a window shade) preventing light emitted from the energy harvesting source(s) from reaching the EHC. The EHC is then used in step **534** to convert the light emitted from the energy harvesting source(s) into an output voltage. The output voltage is then supplied to the rechargeable battery for re-charging the same, as shown by step **536.** Next, a determination is made as to whether the capacity or SOC of the rechargeable battery has reached a certain level.

If the capacity or SOC of the rechargeable battery is not above a pre-defined threshold value **[538:NO],** then method **500** returns to step **536** so that the output voltage of the EHC continues to be supplied to the rechargeable battery. If the capacity or SOC of the rechargeable battery is above a pre-defined threshold value **[538:YES],** then method **500** continues with steps **540-542.** These steps involve: wirelessly communicating a signal from the EHS system to the RCD indicating that the capacity or SOC of the rechargeable battery is above the pre-defined threshold value; and performing operations by the RCD to turn off the energy harvesting source and/or close the cover for blocking light emitted from the energy harvesting source. Subsequently, step **544** is performed where method **500** ends, other processing is performed, or method **500** returns to step **504.**

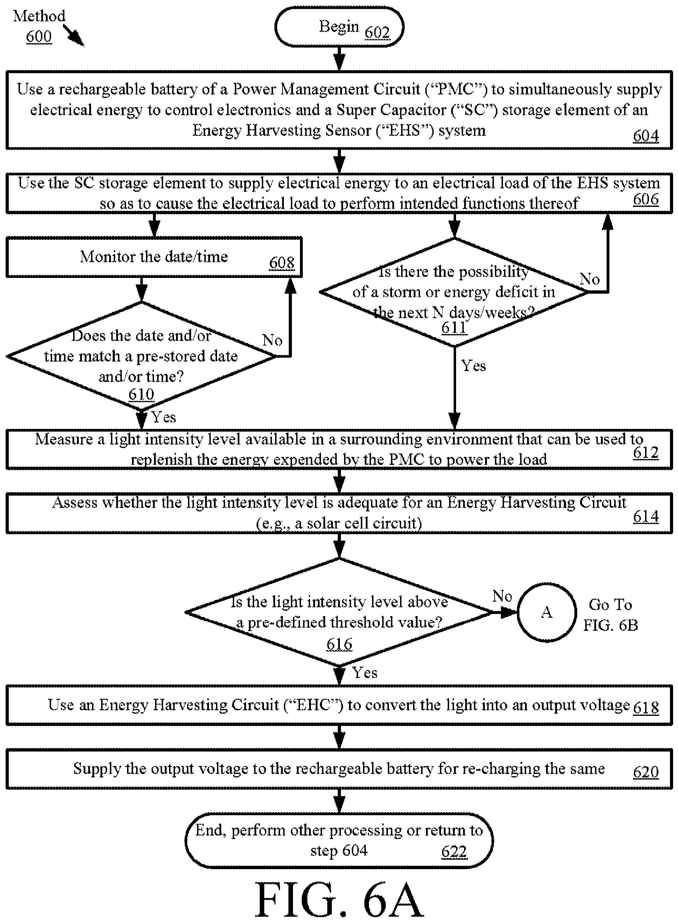

Referring now to FIGS. 6A-6B, there is provided a flow diagram of an exemplary method **600** for adaptively managing power for a self-sustaining EHS. The method **600** begins with step **602** and continues with step **604** where a rechargeable battery (e.g., rechargeable battery **310** of FIG. 3) of a PMC (e.g., PMC **300** of FIG. 3) is used to supply electrical energy to control electronics and an SC storage element (e.g., SC storage element **314** of FIG. 3) of an EHS system (e.g., EHS system **100** of FIG. 1). In a next step **606,** the SC storage element is used to supply electrical energy to an electrical load (e.g.., load **322** of FIG. 3) of the EHS system so as to cause the electrical load to perform unintended functions thereof.

Upon completing step **606,** method **600** continues with steps **608-610** or step 611. Steps **608-610** involve: monitoring a date and/or time; and determining if the date and/or time match(es) a pre-stored date and/or time. The pre-stored date and/or time can be selected based on: power consumption patterns of the EHS system; power profiles of energy harvesting sources; estimated future energy deficits of the EHS system and/or energy harvesting source(s) energy; a business entity's hours of operation; current and future weather of a surrounding environment; and/or time of low power demands on an AC power grid (e.g., 2 AM at which an electric company charges a reduced fee). Upon completing step **610,** method **600** continues with step **612.**

Step **611** involves determining whether there is a possibility of a storm or energy deficit in the next N days or weeks, where N is an integer. If there is not a possibility of a storm or energy deficit in the given time period [**611:NO**], then method **600** returns to step **606.** In contrast, if there is a possibility of a storm or energy deficit in the given time period **[611:YES],** then step **612** is performed.

Step **612** involves measuring a light intensity available in a surrounding environment that can be used to replenish the energy expended by the PMC to power the load. Next in step **614,** an assessment is made as to whether the light intensity level is adequate for an EHC (e.g., EHC **302** of FIG. 3). If the light intensity level is above a pre-defined threshold value **[616:YES],** steps **618-620** are performed. These steps involve: using the EHC to convert the light into an output voltage; and supplying the output voltage to the rechargeable battery for re-charging the same. Next, step **622** is performed where method **600** ends, other processing is performed, or method **600** returns to step **604.**

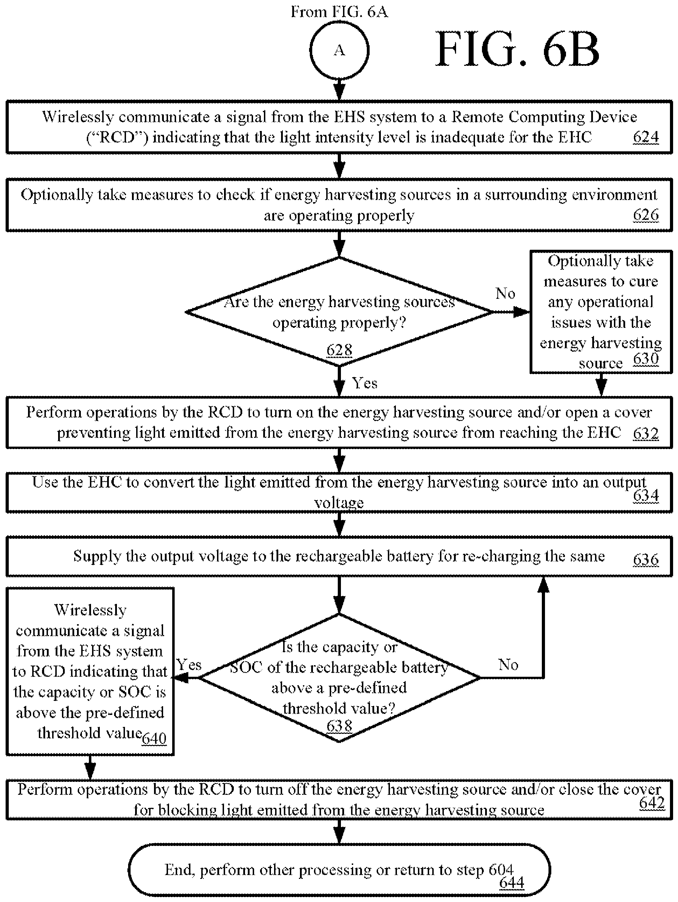

In contrast, if the light intensity level is not above a pre-defined threshold value **[616:NO],** then method **600** continues with step **624** of FIG. 6B. Step **624** involves wirelessly communicating a signal from the EHS system to an RCD (e.g., RCD **700** of FIG. 7) indicating that the light intensity level is inadequate for the EHC. Upon completing step **624,** optional step **626** may be performed where measures are taken to check if energy harvesting sources in a surrounding environment are operating properly. If the energy harvesting sources are operating properly **[628:YES],** then step **632** is performed which will be described below. In contrast, if the energy harvesting sources are not operating properly **[628:NO],** then optional step **630** may be performed. Optional step **630** involves taking measures to cure any operational issues with the energy harvesting source(s). Upon completing optional step **630,** step **632** is performed.

In step **632,** operations are performed by the RCD to turn on the energy harvesting source(s) and/or open a cover preventing light emitted from the energy harvesting source(s) from reaching the EHC. Next in step **634,** the EHC is used to convert the light emitted from the energy harvesting source into an output voltage. The output voltage is supplied to the rechargeable battery for re-charging the same, as shown by step **636.**

If the capacity or SOC of the rechargeable battery is not above a pre-defined threshold value **[638:NO],** method **600** returns to step **636.** In contrast, if the capacity or SOC of the rechargeable battery is above the pre-defined threshold value **[638:YES],** steps **640-642** are performed. These steps involve: wirelessly communicating a signal from the EHS system to the RCD indicating that the capacity or SOC is above the pre-defined threshold value; and performing operations by the RCD to turn off the energy harvesting source(s) and/or close the cover for blocking light emitted from the energy harvesting source(s). Subsequently, step **644** is performed where method **600** ends, other processing is performed, or method **600** returns to step **604.**

All of the apparatus, methods, and algorithms disclosed and claimed herein can be made and executed without undue experimentation in light of the present disclosure. While the invention has been described in terms of preferred embodiments, it will be apparent to those having ordinary skill in the art that variations may be applied to the apparatus, methods and sequence of steps of the method without departing from the concept and scope of the invention. More specifically, it will be apparent that certain components may be added to, combined with, or substituted for the components described herein while the same or similar results would be achieved. All such similar substitutes and modifications apparent to those having ordinary skill in the art are deemed to be within the scope and concept of the invention as defined in the appended claims.

The features and functions disclosed above, as well as alternatives, may be combined into many other different systems or applications. Various presently unforeseen or unanticipated alternatives, modifications, variations or improvements may be made by those skilled in the art, each of which is also intended to be encompassed by the disclosed embodiments.

## Claims

1. A method for adaptively managing power for an Energy Harvesting System, EHS, (100), comprising:
measuring a light intensity level available in a surrounding environment of the EHS (100); wirelessly communicating a first wireless signal from the EHS (100) to a remote device for causing the light intensity level to be increased by remotely turning on a light source or opening a cover preventing light emitted from the light source from reaching an Energy Harvesting Circuit, EHC, when the light intensity level is below a pre-specified level; using the EHC to recharge a rechargeable battery (310) of the EHS (100) when the light intensity level rises to a level above the pre-specified level; and
wirelessly communicating a second wireless signal from the EHS (100) to the remote device for causing the light source be turned off or the cover to be closed, when the capacity or State-Of-Charge, SOC, of the rechargeable battery (310) of the EHS (100) reaches a pr-specified value; wherein
the light intensity level is measured when it is determined that an available energy in the rechargeable battery is not sufficient to meet an electrical load's energy requirements; or
the light intensity level is measured when it is determined that a current date matches a pre-stored date or a current time matches a pre-stored time;or
the light intensity level is measured when it is determined that there is a possibility of a storm or energy deficit in a next N hours, days, weeks or months, where N is an integer.

2. The method according to claim 1, further comprising
supplying power to the electrical load (322) if the available energy in the rechargeable battery (310) is sufficient to meet energy requirements of the electrical load (322).

3. The method according to claim 1, further comprising:
determining if energy harvesting sources in the surrounding environment are operating properly in response to the first wireless signal; and
curing any operational issues with the energy harvesting sources prior to using the EHC to recharge the rechargeable battery (310).

4. The method according to claim 1, further comprising using the rechargeable battery (310) to simultaneously supply electrical energy to control electronics and a capacitor storage element

5. The method according to claim 1, further comprising using the rechargeable battery (310) to charge a capacitor storage element (314) of the EHS (100), and using the capacitor storage element to supply electrical energy to an electrical load (322) of the EHS (100).

6. The method according to claim 1, wherein the cover is a window shade.

7. A system, comprising:
an Energy Harvesting System, EHS, (100) configured to measure a light intensity level available in a surrounding environment, wirelessly communicate a first wireless signal to a remote device for causing
the light intensity level to be increased by remotely turning on a light source or opening a cover preventing light emitted from the light source from reaching an Energy Harvesting Circuit, EHC, when the light intensity level is below a pre-specified level, use an internal Energy Harvesting Circuit, EHC, to recharge an internal rechargeable battery (310) when the light intensity level rises to a level above the pre- specified level, and wirelessly communicate a second wireless signal to the remote device for causing the light source be turned off or the cover to be closed, when the capacity or State-Of-Charge, SOC, of the rechargeable battery (310) of the EHS (100) reaches a pre-specified value; wherein
the light intensity level is measured when it is determined that an available energy in the rechargeable battery is not sufficient to meet an electrical load's energy requirements; or
the light intensity level is measured when it is determined that a current date matches a pre-stored date or a current time matches a pre-stored time; or
the light intensity level is measured when it is determined that there is a possibility of a storm or energy deficit in a next N hours, days, weeks or months, where N is an integer.

8. The system according to claim 7, wherein the EHS (100) further
determines whether an available energy in the rechargeable battery (310) is sufficient to meet energy requirements of an electrical load (322), and
supply power to the electrical load (322) if the available energy in the rechargeable battery (310) is sufficient to meet energy requirements of the electrical load (322).

9. The system according to claim 7, wherein the remote device is configured to determine if energy harvesting sources in the surrounding environment are operating properly in response to the first wireless signal, and
perform actions for curing any operational issues with the energy harvesting sources prior to when the EHC is used to recharge the rechargeable battery (310).

10. The system according to claim 7, wherein particularly at least one of the pre-stored date and pre-stored time are selected based on at least one of (a) power consumption patterns of the EHS (100), (b) power profiles of light sources, (c) estimated future energy deficits of the EHS (100) and/or the light sources, (d) a business entity's hours of operation, (e) current and future weather of the surrounding environment, and (f) times of low power demands on an AC power grid.

11. The system according to claim 7, wherein the rechargeable battery (310) is used to simultaneously supply electrical energy to control electronics and a capacitor storage element (314) of the EHS.

12. The system according to claim 7, wherein the rechargeable battery is used to charge a capacitor storage element (314) of the EHS (100), and the capacitor storage element (314) is used to supply electrical energy to an electrical load (322) of the EHS (100).

13. The system according to claim 7, wherein the cover is a window shade.

## Patentansprüche

1. Verfahren zur adaptiven Verwaltung von Leistung für ein Energiegewinnungssystem, EHS, (100), welches umfasst:
Messen eines Lichtintensitätsniveaus, das in einer Umgebung des EHS (100) verfügbar ist; drahtloses Kommunizieren eines ersten Drahtlossignals von dem EHS (100) an eine Remote-Vorrichtung, um zu bewirken, dass das Lichtintensitätsniveau erhöht wird, indem eine Lichtquelle remote eingeschaltet wird oder eine Abdeckung geöffnet wird, die verhindert, dass Licht von der Lichtquelle eine Energiegewinnungsschaltung, EHC, erreicht, wenn das Lichtintensitätsniveau unterhalb eines vorgegebenen Niveaus ist;
Verwenden der EHC, um eine wiederaufladbare Batterie (310) des EHS (100) aufzuladen, wenn das Lichtintensitätsniveau auf ein Niveau oberhalb des vorgegebenen Niveaus ansteigt; und
Drahtloses Kommunizieren eines zweiten Drahtlossignals von dem EHS (100) an die Remote-Vorrichtung, um zu bewirken, dass die Lichtquelle ausgeschaltet wird oder die Abdeckung geschlossen wird, wenn die Kapazität oder der Ladezustand, SOC, der wiederaufladbaren Batterie (310) des EHS (100) einen vorgegebenen Wert erreicht; wobei
das Lichtintensitätsniveau gemessen wird, wenn festgestellt wird, dass eine verfügbare Energie in der wiederaufladbaren Batterie nicht ausreicht, um den Energieanforderungen eines elektrischen Verbrauchers zu genügen; oder
das Lichtintensitätsniveau gemessen wird, wenn festgestellt wird, dass ein aktuelles Datum mit einem vorgespeicherten Datum übereinstimmt oder eine aktuelle Zeit mit einer vorgespeicherten Zeit übereinstimmt; oder
das Lichtintensitätsniveau gemessen wird, wenn festgestellt wird, dass eine Möglichkeit für einen Sturm oder ein Energiedefizit in einen folgenden N Stunden, Tagen, Wochen oder Monaten besteht, wobei N eine ganze Zahl ist.

2. Verfahren nach Anspruch 1, ferner umfassend:
Zuführen von Leistung an den elektrischen Verbraucher (322), falls die verfügbare Energie in der wiederaufladbaren Batterie (310) ausreichend ist, um Energieanforderungen des elektrischen Verbrauchers (322) zu genügen.

3. Verfahren nach Anspruch 1, ferner umfassend:
Bestimmen, als Reaktion auf das erste Drahtlossignal, ob Energiegewinnungsquellen in der Umgebung korrekt arbeiten;
Beheben aller Betriebsprobleme mit den Energiegewinnungsquellen vor der Verwendung der EHC, um die wiederaufladbare Batterie (310) wiederaufzuladen.

4. Verfahren nach Anspruch 1, ferner umfassend das Verwenden der wiederaufladbaren Batterie (310), um gleichzeitig elektrische Energie an Steuerelektronik und ein Kondensatorspeicherelement (314) des EHS (100) zuzuführen.

5. Verfahren nach Anspruch 1, ferner umfassend die Verwendung der wiederaufladbaren Batterie (310), um ein Kondensatorspeicherelement (314) des EHS (100) aufzuladen, und Verwenden des Kondensatorspeicherelements, um elektrische Energie an einen elektrischen Verbraucher (322) des EHS (100) zuzuführen.

6. Verfahren nach Anspruch 1, wobei die Abdeckung eine Fensterjalousie ist.

7. System, aufweisend:
ein Energiegewinnungssystem, EHS, (100), welches eingerichtet ist, um
ein Lichtintensitätsniveau, das in einer Umgebung verfügbar ist, zu messen, ein erstes Drahtlossignal drahtlos an eine Remotevorrichtung zu senden, um zu bewirken, dass
das Lichtintensitätsniveau erhöht wird, indem eine Lichtquelle remote eingeschaltet wird oder eine Abdeckung, die verhindert, dass von der Lichtquelle emittiertes Licht eine Energiegewinnungsschaltung, EHC, erreicht, geöffnet wird, wenn das Lichtintensitätsniveau unterhalb eines vorgegebenen Niveaus liegt, Verwenden einer internen Energiegewinnungsschaltung, EHC, um eine interne wiederaufladbare Batterie (310) wiederaufzuladen, wenn das Lichtintensitätsniveau auf ein Niveau oberhalb des vorgegebenen Niveaus ansteigt, und
drahtlos ein zweites Drahtlossignal an die Remotevorrichtung zu senden, um zu bewirken, dass die Lichtquelle ausgeschaltet wird oder die Abdeckung geschlossen wird, wenn die Kapazität oder der Ladezustand, SOC, der wiederaufladbaren Batterie (310) des EHS (100) einen vorgegebenen Wert erreicht; wobei
das Lichtintensitätsniveau gemessen wird, wenn festgestellt wird, dass eine verfügbare Energie in der wiederaufladbaren Batterie nicht ausreichend ist, um den Energieanforderungen eines elektrischen Verbrauchers zu genügen; oder
das Lichtintensitätsniveau gemessen wird, wenn festgestellt wird, dass ein aktuelles Datum einem vorgespeicherten Datum entspricht oder eine aktuelle Zeit einer vorgespeicherten Zeit entspricht; oder
das Lichtintensitätsniveau gemessen wird, wenn festgestellt wird, dass eine Möglichkeit für einen Sturm oder ein Energiedefizit in einen nächsten N Stunden, Tagen, Wochen oder Monaten besteht, wobei N eine ganze Zahl ist.

8. System nach Anspruch 7, wobei das EHS (100) ferner
bestimmt, ob eine verfügbare Energie in der wiederaufladbaren Batterie (310) ausreichend ist, um den Energieanforderungen eines elektrischen Verbrauchers (322) zu genügen, und
Leistung an den elektrischen Verbraucher (322) zuzuführen, falls die verfügbare Energie in der wiederaufladbaren Batterie (310) ausreichend ist, um den Energieanforderungen des elektrischen Verbrauchers (322) zu genügen.

9. System nach Anspruch 7, wobei die Remote-Vorrichtung eingerichtet ist, um
als Reaktion auf das erste Drahtlossignal, zu bestimmen, ob Energiegewinnungsquellen in der Umgebung korrekt arbeiten, und
Aktionen zum Beheben aller Betriebsprobleme mit den Energiegewinnungsquellen durchzuführen, bevor die EHC verwendet wird, um die wiederaufladbare Batterie (310) aufzuladen.

10. System nach Anspruch 7, wobei insbesondere das vorgespeicherte Datum und/oder die vorgespeicherte Zeit basierend auf (a) Stromverbrauchsmustern des EHS (100) und/oder (b) Leistungsprofilen von Lichtquellen und/oder (c) geschätzten künftigen Energiedefiziten des EHS (100) und/oder der Lichtquellen und/oder (d) Betriebsstunden einer Geschäftseinheit und/oder (e) aktuellem und zukünftigem Wetter der Umgebung und/oder (f) Malen geringen Strombedarfs an einem Wechselstromnetz ausgewählt wird bzw. werden.

11. System nach Anspruch 7, wobei die wiederaufladbare Batterie (310) verwendet wird, um elektrische Energie gleichzeitig an die Steuerelektronik und an ein Kondensatorspeicherelement (314) des EHS zuzuführen.

12. System nach Anspruch 7, wobei die wiederaufladbare Batterie verwendet wird, um ein Kondensatorspeicherelement (314) des EHS (100) zu laden, und das Kondensatorspeicherelement (314) dazu verwendet wird, elektrische Energie an einen elektrischen Verbraucher (322) des EHS (100) zuzuführen.

13. System nach Anspruch 7, wobei die Abdeckung eine Fensterjalousie ist.

## Revendications

1. Procédé permettant de gérer de manière adaptative l'énergie pour un système de récolte d'énergie, EHS (100), le procédé comprenant :
la mesure d'un niveau d'intensité lumineuse disponible dans un environnement circonvoisin du EHS (100) ;
la communication sans fil d'un premier signal sans fil émanant du EHS (100) à un dispositif à distance, afin d'amener le niveau d'intensité lumineuse à être augmenté au moyen de la mise sous tension à distance d'une source de lumière ou de l'ouverture d'un couvercle empêchant la lumière émise par la source de lumière d'atteindre un circuit de récolte d'énergie, EHC, lorsque le niveau d'intensité lumineuse est inférieur à un niveau pré-spécifié ;
l'utilisation du EHC pour recharger une batterie rechargeable (310) du EHS (100), lorsque le niveau d'intensité lumineuse s'élève à un niveau supérieur au niveau pré-spécifié ; et
communiquer sans fil un second signal sans fil émanant du EHS (100) au dispositif à distance, afin d'amener la source de lumière à être mise hors tension ou le couvercle à être fermé, lorsque la capacité ou l'état de charge (SOC) de la batterie rechargeable (310) du EHS (100) atteint une valeur pré-spécifiée ;
le niveau d'intensité lumineuse étant mesuré lorsqu'il a été déterminé qu'une énergie disponible dans la batterie rechargeable n'est pas suffisante pour satisfaire aux besoins énergétiques d'une charge électrique ; ou
le niveau d'intensité lumineuse étant mesuré lorsqu'il a été déterminé qu'une date actuelle correspond à une date pré-stockée ou qu'une heure actuelle correspond à une heure pré-stockée ; ou
le niveau d'intensité lumineuse étant mesuré lorsqu'il a été déterminé qu'il existe une possibilité d'orage ou de déficit d'énergie pendant les prochaines N heures, jours, semaines ou mois, N étant un nombre entier.

2. Le procédé selon la revendication 1, comprenant en outre :
l'alimentation en énergie de la charge électrique (322) si l'énergie disponible dans la batterie rechargeable (310) est suffisante pour satisfaire aux besoins énergétiques de la charge électrique (322).

3. Le procédé selon la revendication 1, comprenant en outre :
la détermination du bon fonctionnement des sources de récolte d'énergie dans l'environnement circonvoisin, en réponse au premier signal sans fil ; et
la rectification de tout problème opérationnel des sources de récolte d'énergie avant l'utilisation du EHC pour recharger la batterie rechargeable (310).

4. Le procédé selon la revendication 1, comprenant en outre l'utilisation de la batterie rechargeable (310) pour alimenter simultanément en énergie électrique une électronique de commande et un élément de stockage à condensateur (314) du EHS (100).

5. Le procédé selon la revendication 1, comprenant en outre l'utilisation de la batterie rechargeable (310) pour charger un élément de stockage à condensateur (314) du EHS (100), et l'utilisation de l'élément de stockage à condensateur pour alimenter en énergie électrique une charge électrique (322) du EHS (100).

6. Le procédé selon la revendication 1, dans lequel le couvercle est un store.

7. Système, comprenant :
un système de récolte d'énergie (EHS) (100), conçu :
pour mesurer un niveau d'intensité lumineuse disponible dans un environnement circonvoisin,
pour communiquer sans fil un premier signal sans fil à un dispositif à distance, afin d'amener le niveau d'intensité lumineuse à être augmenté au moyen de la mise sous tension à distance d'une source de lumière ou de l'ouverture d'un couvercle empêchant la lumière émise par la source de lumière d'atteindre un circuit de récolte d'énergie (EHC selon l'abréviation anglo-saxonne), lorsque le niveau d'intensité lumineuse est inférieur à un niveau pré-spécifié,
pour utiliser un circuit de récolte d'énergie (EHC) pour recharger une batterie rechargeable interne (310), lorsque le niveau d'intensité lumineuse s'élève à un niveau supérieur au niveau pré-spécifié, et
pour communiquer sans fil un second signal sans fil au dispositif à distance, afin d'amener la source de lumière à être mise hors tension ou le couvercle à être fermé, lorsque la capacité ou l'état de charge (SOC) de la batterie rechargeable (310) du EHS (100) atteint une valeur pré-spécifiée ;
le niveau d'intensité lumineuse étant mesuré lorsqu'il a été déterminé qu'une énergie disponible dans la batterie rechargeable n'est pas suffisante pour satisfaire aux besoins énergétiques d'une charge électrique ; ou
le niveau d'intensité lumineuse étant mesuré lorsqu'il a été déterminé qu'une date actuelle correspond à une date pré-stockée ou qu'une heure actuelle correspond à une heure pré-stockée ; ou
le niveau d'intensité lumineuse étant mesuré lorsqu'il a été déterminé qu'il existe une possibilité d'orage ou de déficit d'énergie pendant les prochaines N heures, jours, semaines ou mois, où N est un nombre entier.

8. Le système selon la revendication 7, dans lequel l'EHS (100), en outre :
détermine si une énergie disponible dans la batterie rechargeable (310) est suffisante pour satisfaire aux besoins énergétiques d'une charge électrique (322), et
alimente en énergie la charge électrique (322) si l'énergie disponible dans la batterie rechargeable (310) est suffisante pour satisfaire aux besoins énergétiques de la charge électrique (322).

9. Le système selon la revendication 7, dans lequel le dispositif à distance est conçu :
pour déterminer si les sources de récolte d'énergie dans l'environnement circonvoisin fonctionnent de manière appropriée en réponse au premier signal sans fil, et
pour effectuer des actions permettant de rectifier tout problème opérationnel des sources de récolte d'énergie avant l'utilisation du EHC pour recharger la batterie rechargeable (310).

10. Le système selon la revendication 7, dans lequel, en particulier, la date pré-stockée et/ou l'heure pré-stockée sont sélectionnées en fonction (a) des habitudes de consommation d'énergie du EHS (100), et/ou (b) des profils de puissance des sources lumineuses, et/ou (c) des déficits énergétiques futures estimés du EHS (100) et/ou des sources lumineuses, et/ou (d) des heures d'ouverture d'une entité commerciale, et/ou (e) des conditions météorologiques actuelles et futures de l'environnement circonvoisin, et/ou (f) des heures de demandes de faible puissance sur un réseau électrique CA.

11. Le système selon la revendication 7, dans lequel la batterie rechargeable (310) est utilisée pour alimenter simultanément en énergie électrique une électronique de commande et un élément de stockage à condensateur (314) du EHS.

12. Le système selon la revendication 7, dans lequel la batterie rechargeable (310) est utilisée pour charger un élément de stockage à condensateur (314) du EHS (100), et l'élément de stockage à condensateur (314) est utilisé pour alimenter en énergie électrique une charge électrique (322) du EHS (100).

13. Le système selon la revendication 7, dans lequel le couvercle est un store.
